Europäisches Patentamt

European Patent Office

Office européen des brevets

(11) Numéro de publication: **0 478 420 B1**

# FASCICULE DE BREVET EUROPEEN

(45) Date de publication de fascicule du brevet: **05.04.95**    (51) Int. Cl.⁶: **F41G  3/22**, G01D 5/20

(21) Numéro de dépôt: **91402487.2**

(22) Date de dépôt: **18.09.91**

(54) **Système de détermination électromagnétique de la position et de l'orientation d'un mobile.**

(30) Priorité: **26.09.90 FR 9011850**

(43) Date de publication de la demande:
**01.04.92 Bulletin  92/14**

(45) Mention de la délivrance du brevet:
**05.04.95 Bulletin  95/14**

(84) Etats contractants désignés:
**DE FR GB IT NL**

(56) Documents cités:
**EP-A- 0 021 906**
**EP-A- 0 058 412**

(73) Titulaire: **SEXTANT AVIONIOUE S.A.**
**5/7 rue Jeanne Braconnier**
**Parc Tertiaire**
**F-92366 Meudon la Forêt Cédex (FR)**

(72) Inventeur: **Voisin, Gérard**
**22 rue Rosemonde Gérard**
**F-33160 Saint Medard-En-Jalles (FR)**
Inventeur: **Monin, Pascal**
**34 Chemin de Milavy**
**F-33320 Le Taillan Medoc (FR)**

(74) Mandataire: **Bloch, Gérard et al**
**2, square de l'Avenue du Bois**
**F-75116 Paris (FR)**

## Description

Le principe de la détection de position électromagnétique est bien connu pour déterminer la position et l'orientation d'un mobile, solide, dans un repère de référence. L'une des applications de ce principe est la détermination de la direction de visée d'un viseur de casque qu'un fantassin, un conducteur ou un pilote de char ou d'aéronef a placé sur sa tête, pour y asservir une arme, un missile ou une caméra de pilotage, par exemple.

Ce principe de détection met en oeuvre un émetteur, ou radiateur, de champ magnétique, lié au repère de référence, ou référentiel, dans lequel sont effectuées les mesures, un récepteur, ou capteur, de champ magnétique, fixé au mobile dont la position et l'orientation doivent être déterminées, et des circuits électroniques de traitement incluant des amplificateurs analogiques, un processeur de calcul et des algorithmes de traitement.

Le radiateur doit au mieux satisfaire aux conditions de la théorie dipolaire, dans laquelle le système de coordonnées pour la description mathématique de la radiation est une sphère centrée sur le dipole et la fonction de Green d'espace libre ne dépend que de la coordonnée radiale.

Le capteur de champ magnétique doit être le plus ponctuel possible. L'émetteur rayonne, séquentiellement ou par multiplexage, un champ suivant deux ou trois axes orthogonaux et le capteur détecte séquentiellement les composantes de ce champ selon trois ou deux axes orthogonaux, l'émission et la réception s'effectuant généralement chacune suivant trois axes. Le capteur fournit ainsi, par axe d'émission, trois mesures, soit au total neuf qu'on organise en une matrice 3x3, à partir de laquelle les algorithmes de traitement fournissent la position et l'orientation du capteur par rapport au radiateur.

On remarquera ici que la détermination de la position et de l'orientation du capteur implique la détermination de six variables - les trois coordonnées cartésiennes, le gisement, le site et le roulis - et que six mesures au moins sont donc nécessaires. Si l'émission n'est effectuée que suivant deux axes, la réception doit par conséquent l'être suivant trois, et inversement.

Dans un référentiel déterminé, le champ magnétique en un point donne est représenté par un vecteur $\vec{H}$. Dans ce référentiel, les axes de sensibilité du capteur sont représentés par un vecteur $\vec{C}$. Les résultats des mesures effectuées par le capteur peuvent être disposés sous forme de matrice M correspondant au produit scalaire $\vec{C} . \vec{H}$

$$\vec{C} . \vec{H} = C^T H = M$$

H étant la matrice du champ et $C^T$ la matrice transposée de la matrice C des axes de sensibilité du capteur.

Le capteur, dans le référentiel, peut subir soit une translation soit une rotation. Considérons celle-ci, exprimée par une matrice de rotation R. La matrice des axes de sensibilité du capteur devient RC et celle des mesures $M_R$.

$$M_R = C^T R^T H$$

Si les trois axes du capteur sont orthonormés,

$$C = \begin{pmatrix} 1 & 0 & 0 \\ 0 & 1 & 0 \\ 0 & 0 & 1 \end{pmatrix} = (1)$$

Par conséquent

$$M_R = R^T H$$

H dépendant de la position du capteur et $M_R$ de sa position et de son orientation.

En présence de perturbations magnétiques, par exemple provoquées par les masses métalliques d'un avion, les algorithmes de traitement reposent sur des relevés cartographiques. Pour obtenir cette cartographie préalable, on procède à des mesures du champ par le capteur en de multiples points de l'espace auxquels on associe donc des matrices de mesures perturbées. Soit $M_C$ l'une de celles-ci. Si le capteur subit une rotation R, la matrice de mesures devrait devenir

$$M_R = R^T M_C$$
$$M_R^T = M_C^T R$$
$$M_R^T M_R = M_C^T RR^T M_C$$
$$= M_C^T M_C$$

Le produit matriciel $M_R^T M_R$ est donc invariant en rotation et représentatif du point considéré.

La cartographie vise à déterminer la fonction f de correspondance entre $M_C$ et $M_C^T M_C$.

Lors des mesures ultérieures, à une matrice $M_R$ correspond le produit $M_R^T M_R$.

Comme $M_R^T M_R = M_C^T M_C$, on en déduit $M_C$ par la fonction f, donc la position du capteur. Pour déterminer la matrice de rotation R, c'est-à-dire l'orientation des axes du capteur, connaissant $M_R$ et $M_C$, on calcule R à partir de l'équation $M_R = R^T M_C$, soit

$$R = M_C M_R^{-1}$$

On connait déjà, par le document FR-A-2 458 838 (791441), un système de détermination électromagnétique de la position et de l'orientation d'un mobile.

Schématiquement le radiateur et le capteur de ce système sont, chacun, constitués d'un groupe de trois bobines identiques commandées en courant et disposées respectivement le long de trois axes orthogonaux. Pour réunir au mieux les conditions du dipôle, tant pour le radiateur que pour le capteur, les dimensions des bobines sont les plus petites possibles. On pourrait d'ailleurs substituer à chaque bobine deux demi-bobines parcourues par le même courant. On pourrait aussi considérer, comme radiateur et capteur, une sphère en matériau magnétique entourée de trois bobines orthogonales.

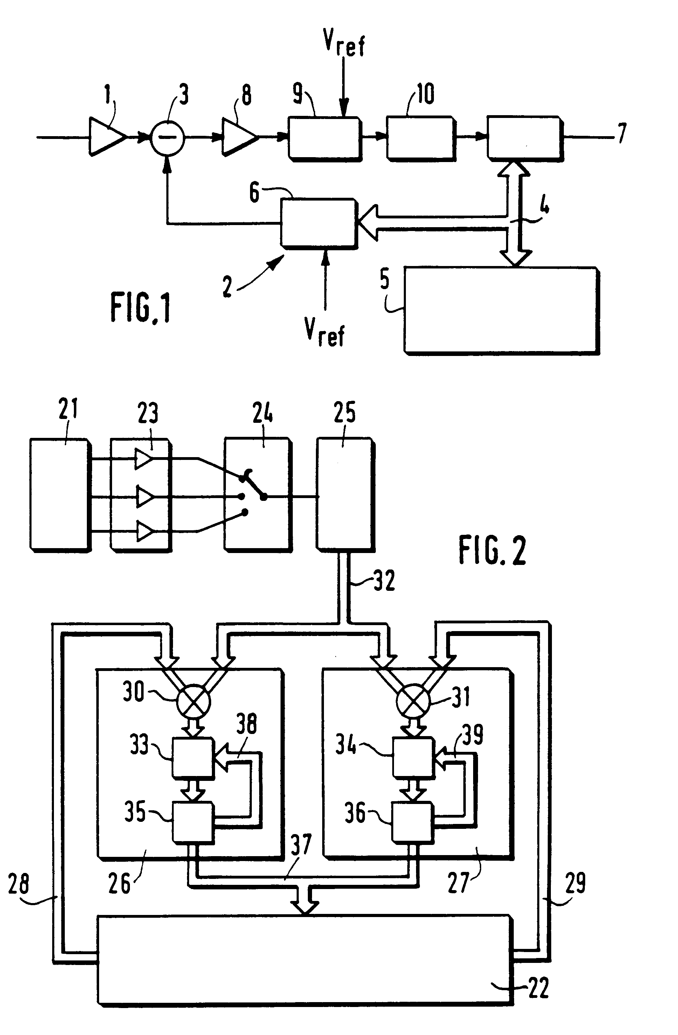

Pour ce qui concerne la chaîne de traitement des signaux délivrés par le capteur, du système de l'art antérieur évoqué ci-dessus, et qui vise à déterminer les amplitudes de ces signaux, elle comporte une voie par axe et sur chaque voie, en référence à la figure 1, un amplificateur 1 et une boucle d'asservissement analogique 2, entre un mélangeur 3 et un bus 4 du processeur de calcul 5, pour éviter les phénomènes de couplage par diaphonie et améliorer la précision et, dans le mélangeur 3, soustraire au signal délivré un signal Vref en phase avec celui-ci, de même fréquence et presque de même amplitude. L'asservissement est piloté par un logiciel du processeur de calcul 5 actualisé continuement pour tenir compte de la mesure précédente. Le signal de référence fourni au mélangeur 3 est fixé par un convertisseur numérique-analogique CNA 6 commandé par le processeur 5. Le signal de sortie de la boucle d'asservissement 2 est fourni au processeur de calcul 5 après conversion dans un convertisseur analogique-numérique CAN 7. Entre le mélangeur 3 et le convertisseur 7, la boucle 2 comprend un amplificateur 8, un démodulateur 9 et un intégrateur 10. Le démodulateur 9 assure une démodulation synchrone et cohérente et redresse le signal issu du mélangeur 3 par multiplication par le signal Vref de même fréquence et en phase. L'intégrateur 10 intègre le signal du démodulateur 9 sur une durée déterminée par le processeur 5 et le résultat de l'intégration est numérisé dans le convertisseur CAN 7.

Mais une telle chaîne de traitement présente des inconvénients. Elle doit être étalonnée avant chaque mesure. Les signaux d'entrée du mélangeur 3 et du démodulateur 9 doivent être rigoureusement en phase.

La présente invention vise à pallier ces inconvénients.

A cet effet, la présente invention concerne un système de détermination électromagnétique de la position et de l'orientation d'un mobile comprenant un radiateur magnétique, lié à un référentiel, un capteur magnétique, fixé au mobile, le radiateur rayonnant séquentiellement des champs suivant des axes d'émission orthogonaux et le capteur fournissant séquentiellement des signaux de détection des composantes des champs d'émission selon des axes de réception orthogonaux, le produit du nombre d'axes d'émission et du nombre d'axes de réception étant au moins égal à six, une chaîne de traitement des signaux du capteur pour en déterminer les amplitudes et un processeur de calcul avec un support d'algorithmes de traitement, système caractérisé par le fait qu'il comporte un multiplexeur relié à la sortie du capteur, pour multiplexer séquentiellement sur une voie les signaux de détection du capteur, un dispositif d'échantillonnage du signal sortant du multiplexeur, d'amplitude A et de pulsation $\omega$ et correspondant à un couple de deux axes d'émission et de réception, des moyens pour multiplier les échantillons du dispositif d'échantillonnage respectivement par des signaux de référence sin $\omega t$ et cos $\omega t$ et des moyens pour accumuler les deux sommes des produits des multiplications pendant une durée au moins égale à

une période $\frac{2\pi}{\omega}$ avant de les fournir au processeur de calcul qui en extrait l'amplitude A.

Le système de l'invention tire son intérêt de l'unicité de la chaîne de traitement des signaux du capteur, de sa simplificité, permettant un traitement entièrement numérique, et de son insensibilité au calage des phases.

Avantageusement, le dispositif d'échantillonnage comporte un convertisseur analogique-numérique rapide, dit "flash", et les échantillons du convertisseur sont traités dans au moins un multiplieur-accumulateur MAC rapide.

De préférence, le système comporte deux multiplieurs-accumulateurs rapides recevant respectivement les deux signaux de référence sin ωt et cos ωt.

L'invention sera mieux comprise à l'aide de la description suivante de la chaîne de traitement des signaux du capteur du système de l'invention, en référence au dessin annexé, sur lequel
- la figure 1 représente une chaîne de traitement de l'art antérieur, déjà décrite ci-dessus;
- la figure 2 représente la chaîne de traitement du système de l'invention, et
- la figure 3 illustre le calibrage du capteur de la chaîne de la figure 1.

En référence à la figure 2, la chaîne de traitement des signaux du capteur 21, recevant les champs magnétiques émis par un émetteur, comprend, en série entre le capteur et le processeur de calcul 22, un bloc de préamplification 23, avec un préamplificateur sur chacune des voies de réception, ici au nombre de trois, un multiplexeur séquentiel 24, un bloc d'échantillonnage 25, ici constitué d'un convertisseur analogique-numérique rapide de type "flash", et deux multiplieurs accumulateurs rapides MAC 26, 27 en parallèle. On notera que l'émetteur, ou radiateur, est relié au processeur 22 par un bloc d'amplification de puissance.

Par deux bus 28, 29 issus du processeur 22, les deux MAC reçoivent respectivement sur deux multiplicateurs 30, 31 deux signaux de référence sin ωt et cos ωt, les deux multiplicateurs 30, 31 recevant également du bloc d'échantillonnage 25, par un bus 32, le signal A cos(ωt + φ) correspondant à l'un des couples de deux axes d'émission et de réception, φ représentant le déphasage du signal reçu par rapport aux signaux de référence, chacun des signaux associés respectivement à tous les couples d'axes d'émission et de réception étant saisi grâce au multiplexage séquentiel sur une voie du multiplexeur 24.

Chaque multiplieur accumulateur rapide 26(27) comporte un sommateur numérique 33(34), recevant le signal du multiplicateur 30(31), et un registre mémoire 35(36), 35(36), connecté par un bus 37 au processeur 22 et par un bus 38(39) au sommateur 33(34).

Les échantillons du signal A cos(ωt + φ) sont multipliés par sin ωt, cos ωt dans le multiplicateur 30,31. Le produit de chaque multiplication est additionné de façon numérique dans le sommateur 33,34 au résultat précédemment accumulé dans le registre 35,36, le nouveau résultat écrasant le précédent dans le registre 35,36. Ces opérations de multiplication, de sommation et d'accumulation sont répétées sur une durée ici égale à plusieurs périodes $\frac{2\pi}{\omega}$ avant que le résultat accumulé ne soit transféré dans le processeur 22 pour exploitation et calcul de A et détermination de la position et de l'orientation recherchées par détermination des matrices $M_R$, $M_C$ et R. .

Simplement à titre d'explication, le fonctionnement des multiplieurs accumulateurs MAC 26, 27 peut être mathématiquement expliqué comme suit.

Premier MAC

Il reçoit en entrée de son multiplicateur 30
A cos(ωt + φ) échantillonné et sin ωt.

La sortie de son multiplicateur fournit :

$$A\cos(\omega t + \varphi)\sin\omega t = A(\cos\omega t\cos\varphi - \sin\omega t\sin\varphi)\sin\omega t$$

$$= A(\cos\omega t\sin\omega t\cos\varphi - \sin^2\omega t\sin\varphi)$$

$$= A\left(\frac{\sin 2\omega t}{2}\cos\varphi - \frac{1-\cos 2\omega t}{2}\sin\varphi\right)$$

$$= -\frac{A}{2}\sin\varphi + \frac{A}{2}(\sin 2\omega t\cos\varphi + \cos 2\omega t\sin\varphi)$$

Du fait de l'accumulation des produits de la multiplication sur une longue durée, ici égale à plusieurs périodes

$$NT = \frac{2\pi N}{\omega}$$

les termes dépendant de $\omega t$ s'annulent et il est ainsi extrait le terme continu $-\frac{A}{2}\sin\phi$.

Deuxième MAC

Il reçoit en entrée de son multiplicateur 31 $A\cos(\omega t + \phi)$ échantillonné et $\cos \omega t$.
La sortie de son multiplicateur fournit :

$$
\begin{aligned}
A\cos(\omega t + \varphi)\cos\omega t &= A(\cos\omega t\cos\varphi - \sin\omega t\sin\varphi)\cos\omega t\\
&= A(\cos^2\omega t\cos\varphi - \sin\omega t\cos\omega t\sin\varphi)\\
&= A(\cos\varphi\frac{1+\cos2\omega t}{2} - \frac{\sin2\omega t}{2}\sin\varphi)\\
&= \frac{A}{2}\cos\varphi + \frac{A}{2}(\cos2\omega t\cos\varphi - \sin2\omega t\sin\varphi)
\end{aligned}
$$

Du fait de l'accumulation des produits de la multiplication sur une longue durée, ici égale à plusieurs périodes

$$NT = \frac{2\pi N}{\omega},$$

les termes dépendant de $\omega t$ s'annulent et on extrait ainsi le terme continu $\frac{A}{2}\cos\phi$
Le processeur 22 élève au carré les deux résultats

$$\frac{A^2}{4}\sin2\varphi \quad \text{et} \quad \frac{A^2}{4}\cos^2\varphi ,$$

les additionne

$$\frac{A^2}{4}(\sin^2\varphi + \cos^2\varphi) = \frac{A^2}{4}$$

et extrait la racine carrée de la somme pour déterminer $\frac{A}{2}$ et donc A.

On a vu plus haut que les échantillons du signal étaient multipliés par $\sin \omega t$ et $\cos \omega t$ dans les multiplicateurs et que les produits des multiplications étaient additionnés de façon numérique dans les sommateurs des multiplieurs accumulateurs. Le traitement pourrait aussi être effectué de manière analogique pour ne numériser les deux voies qu'après intégration sur la durée considérée, au moins égale à $\frac{2\pi}{\omega}$, juste avant de fournir les résultats accumulés et numérisés au processeur.

On a vu aussi plus haut que, dans le système de l'invention, on calculait l'amplitude A du signal A cos ($\omega t + \phi$) sortant du bloc d'échantillonnage 25. En fait, le résultat du calcul est entaché d'une erreur due notamment à des couplages parasites (couplages entre axes, couplages capacitifs ou selfiques avec les fils de sortie du capteur), bref, à des défauts du capteur. Pour s'affranchir de cette erreur, on peut procéder au préalable à un calibrage du capteur pour déterminer l'angle de phase $\phi_u$ de la mesure utile. Pour cela, et l'émetteur n'étant pas en fonctionnement, on mesure, à l'aide d'un voltmètre, à la sortie des multiplieurs accumulateurs MAC, le déphasage $\phi_1$ d'un signal électrique fourni par un générateur de calibrage en série avec la bobine de réception considérée du capteur. On déduit ensuite, toujours à l'aide du voltmètre, la rotation de phase $\phi_2$ provoquée par le bloc de préamplification 23. Enfin, on mesure le déphasage $\phi_3$ provoqué par l'émetteur en fonctionnement.

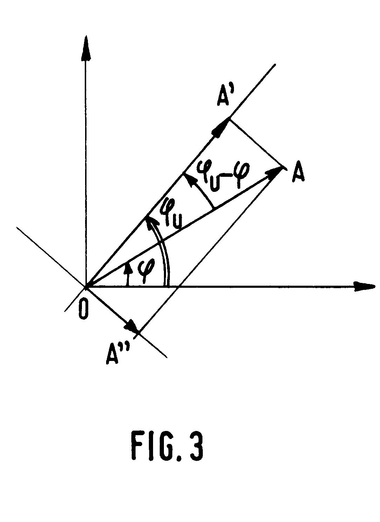

Ces défauts de couplage, ou diaphonie, engendrent une composante de mesure perpendiculaire à la composante utile, conformément au dessin de la figure 3.

L'angle de phase de la mesure utile est égal à

$$\phi_u = \phi_2 + \phi_3 + 90°$$

Soit donc $\phi$ , le déphasage, par rapport à l'axe de référence des abscisses, de l'axe de mesure de l'amplitude

$$A = |\overrightarrow{OA}|$$

Le vecteur $\overrightarrow{OA}$ est la résultante de la composante $\overrightarrow{OA}'$, le long de l'axe de mesure utile déphasé de $\phi_u$ , dont l'amplitude, utile, est à déterminer, et d'une composante $\overrightarrow{OA}''$ perpendiculaire - + 90° ou - 90° selon qu'on considère des couplages capacitifs ou selfiques - à la composante $\overrightarrow{OA}'$.

Connaissant A, on calcule

$$A' = |\overrightarrow{OA'}|$$

par la relation

$$A' = A \cos(\phi_u - \phi)$$

Quant à l'angle de phase $\phi$ , $\frac{A}{2} \cos \phi$ et $\frac{A}{2} \sin \phi$ , et donc $\cos \phi$ et $\sin \phi$ ayant été déterminés, il est donné par la relation

$$\phi = \text{Arc tg} \frac{\sin \phi}{\cos \phi}$$

Les calculs de $\phi$ et A' sont effectués par le processeur 22 qui constitue donc aussi un moyen de correction de mesure.

**Revendications**

1. Système de détermination électromagnétique de la position et de l'orientation d'un mobile comprenant un radiateur magnétique, lié à un référentiel, un capteur magnétique (21), fixé au mobile, le radiateur rayonnant séquentiellement des champs suivant des axes d'émission orthogonaux et le capteur (21) fournissant séquentiellement des signaux de détection des composantes des champs d'émission selon des axes de réception orthogonaux, le produit du nombre d'axes d'émission et du nombre d'axes de réception étant au moins égal à six, une chaîne de traitement des signaux du capteur pour en déterminer les amplitudes et un processeur de calcul avec un support d'algorithmes de traitement, système caractérisé par le fait qu'il comporte un multiplexeur (24) relié à la sortie du capteur, pour multiplexer séquentiellement sur une voie les signaux de détection du capteur (21), un dispositif (25) d'échantillonnage du signal sortant du multiplexeur (24), d'amplitude A et de pulsation $\omega$ et correspondant à un couple de deux axes d'émission et de réception, des moyens (30, 31) pour multiplier les échantillons du dispositif d'échantillonnage (25) respectivement par des signaux de référence $\sin \omega t$ et $\cos \omega t$ et des moyens (33, 35, 34, 36) pour accumuler les deux sommes des produits des multiplications pendant une durée au moins égale à une période $\frac{2\pi}{\omega}$ avant de les fournir au processeur de calcul (22) qui en extrait l'amplitude A.

2. Système selon la revendication 1, dans lequel le dispositif d'échantillonnage (25) comporte un convertisseur analogique-numérique rapide.

3. Système selon l'une des revendications 1 et 2, dans lequel les échantillons du dispositif d'échantillonnage (25) sont traités dans au moins un multiplieur accumulateur MAC rapide.

4. Système selon l'une des revendications 1 à 3, dans lequel il est prévu deux multiplieurs rapides (26, 27) recevant du processeur de calcul (22) respectivement les deux signaux de référence sin ωt et cos ωt.

5. Système selon l'une des revendications 1 à 4, dans lequel il est prévu des moyens de calibrage et des moyens (22) de correction de mesure pour s'affranchir de la diaphonie.

**Claims**

1. System for the electromagnetic determination of the position and orientation of a moving body comprising a magnetic radiator, linked with a reference system, a magnetic sensor (21), fixed to the moving body, the radiator radiating sequentially fields along orthogonal axes of transmission and the sensor (21) supplying sequentially detection signals of components of the fields of transmission along orthogonal reception axes, the product of the number of transmission axes and of the number of reception axes being at least equal to six, a chain for processing signals from the sensor for determining the amplitudes thereof and a calculation processor with a support for processing algorithms, which system is characterised by the fact that it comprises a multiplexer (24) connected to the output of the sensor, for sequentially multiplexing on one channel the detection signals of the sensor (21), a device (25) for sampling the signal leaving the multiplexer (24), of amplitude A and of pulse ω and corresponding to a pair of two transmission and reception axes, means (30, 31) for multiplying the samples of the sampling device (25) respectively by reference signals sin ωt and cos ωt and means (33, 35, 34, 36) for accumulating the two totals of the products of the multiplications during a time interval at least equal to a period $\frac{2\Pi}{\omega}$ before supplying them to the calculation processor (22) which extracts the amplitude A therefrom.

2. System according to Claim 1, in which the sampling device (25) comprises a high-speed analog-to-digital converter.

3. System according to one of Claims 1 and 2, in which the samples from the sampling device (25) are processed in at least one CAM high speed accumulator multiplier.

4. System according to one of Claims 1 to 3, in which two high speed multipliers (26, 27) are provided, receiving from the calculation processor (22) respectively the two reference signals sin ωt and cos ωt.

5. System according to one of Claims 1 to 4, in which calibration means and measurement correction means (22) are provided for becoming independent of the diaphony.

**Patentansprüche**

1. System zur elektromagnetischen Bestimmung der Position und Lage eines beweglichen Körpers, umfassend einen magnetischen Strahler, der mit einem Bezugssystem verbunden ist, einen magnetischen Aufnehmer (21), der an dem beweglichen Körper befestigt ist, wobei der Strahler sequentiell gemäß orthogonalen Emissionsachsen Felder ausstrahlt und der Aufnehmer (21) sequentiell Signale der Erfassung der Komponenten der Emissionsfelder gemäß orthogonaler Empfangsachsen liefert, wobei das Produkt aus der Zahl der Emissionsachsen und der Zahl der Empfangsachsen mindestens sechs beträgt, eine Kette zur Verarbeitung der Signale des Aufnehmers, um deren Amplituden zu bestimmen, und einen Rechenprozessor mit einer Verarbeitungsalgorithmenunterstützung, ein System, dadurch gekennzeichnet, daß es einen mit dem Ausgang des Aufnehmers verbundenen Multiplexer (24), um sequentiell auf einem Weg die Erfassungssignale des Aufnehmers (21) zu multiplexen, eine Vorrichtung (25) zur Abtastung des von dem Multiplexer (24) ausgegebenen Signals mit der Amplitude A und der Kreisfrequenz ω, das einem Paar von zwei Achsen der Emission und des Empfangs entspricht, Mittel (30, 31), um die Abtastproben der Abtastvorrichtung (25) jeweils mit Bezugssignalen sin ωt und cos ωt zu multiplizieren, und Mittel (33, 35, 34, 36) aufweist, um die beiden Summen der Produkte der Multiplikationen während einer Dauer, die mindestens einer Periode 2π/ω entspricht, zu akkumulieren, bevor diese an den Rechenprozessor (22) geliefert werden, der daraus die Amplitude A berechnet.

2. System nach Anspruch 1, bei dem die Abtastvorrichtung (25) einen schnellen Analog-Digital-Umsetzer umfaßt.

3. System nach einem der Ansprüche 1 und 2, bei dem die Abtastproben der Abtastvorrichtung (25) in mindestens einem schnellen Multiplikator-Akkumulator MAC verarbeitet werden.

4. System nach einem der Ansprüche 1 bis 3, bei dem zwei schnelle Multiplikatoren (26, 27) vorgesehen sind, die von dem Rechenprozessor (22) jeweils die beiden Bezugssignale sin ωt und cos ωt erhalten.

5. System nach einem der Ansprüche 1 bis 4, bei dem Mittel zur Kalibrierung und Mittel (22) zur Korrektur der Messung vorgesehen sind, um das Nebensprechen zu beseitigen.

FIG.1

FIG.2

FIG. 3